(19) Europäisches Patentamt
European Patent Office
Office européen des brevets

(11) **EP 3 620 230 A1**

(12) **EUROPÄISCHE PATENTANMELDUNG**

(43) Veröffentlichungstag:
**11.03.2020 Patentblatt 2020/11**

(51) Int Cl.:
***B01J /*** *(2006.01)*

(21) Anmeldenummer: **18193090.0**

(22) Anmeldetag: **07.09.2018**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(71) Anmelder: **Fluitec Invest AG**
**8442 Hettlingen (CH)**

(72) Erfinder:
• **ALTENBURGER, Daniel**
**8461 Oerlingen (CH)**

• **ROSASCO, Esteban**
**8353 Elgg (CH)**
• **ANDREOLI, Silvano**
**8413 Neftenbach (CH)**
• **GEORG, Alain**
**8442 Hettlingen (CH)**

(74) Vertreter: **Clerc, Natalia**
**Isler & Pedrazzini AG**
**Giesshübelstrasse 45**
**Postfach 1772**
**8027 Zürich (CH)**

(54) **EINRICHTUNG EINES CHEMISCHEN REAKTORS UND VERFAHREN**

(57)    Eine Einrichtung eines chemischen Reaktors weist einen statischen Mischer-Wärmetauscher (1, 4) mit einem Einsatz (7) und mit mindestens einen oszillierenden Pulsator (3, 4, 5, 6) auf. Das Fluidgemisch durchströmt den statischen Mischer-Wärmetauscher in Form eines pulsierenden Flusses. Die Einrichtung und das zugehörige Verfahren ermöglichen die Reduktion von Fouling. Zudem lassen sich im Labor getestete Einrichtungen skalieren und in entsprechender Vergrösserung in industriellen chemischen Anlagen verwenden.

**FIG. 3**

**Beschreibung**

TECHNISCHES GEBIET

Die vorliegende Erfindung betrifft eine Einrichtung eines chemischen Reaktors und ein Verfahren zum Betreiben eines chemischen Reaktors. Die Einrichtung umfasst insbesondere einen skalierbaren, statischen Mischer-Wärmetauscher zum Heizen und Kühlen von fliessfähigen Stoffen, d.h. Fluiden.

STAND DER TECHNIK

Statische Mischer werden heute in vielen chemischen Prozessanlagen eingesetzt. Sie bilden Vorrichtungen zum Mischen von Fluiden, in welchen alleine die Strömungsbewegung der Fluide die Vermischung bewirkt. Sie weisen üblicherweise keine beweglichen Elemente auf. Charakteristisch für statische Mischer ist somit, dass nur die zu mischenden Flüssigkeiten oder Gase bewegt werden. Im Gegensatz zu dynamischen Mischsystemen findet kein Rühren statt, sondern Pumpen, Gebläse oder Kompressoren fördern kontinuierlich die zu mischenden Medien zum Mischrohr, welches mit Mischelementen ausgerüstet ist. Statische Mischer können generell in folgenden Anwendungsbereichen eingesetzt werden:

- Vermischen von pumpbaren Flüssigkeiten,
- Dispergieren und Emulgieren von ineinander unlöslichen Komponenten,
- Mischen von reaktiven Flüssigkeiten,
- Mischen und Homogenisieren von Kunststoffschmelzen,
- Gas-Flüssig-Kontaktieren,
- Mischen von Gasen,
- Einsatz als Verweilzeitstrecke mit engem Verweilzeitverhalten.

Bei statischen Mischern findet der Wärmeübergang an der Rohrwand statt. Werden statische Mischer zudem zum Wärmeaustausch verwendet, so werden die Mischelemente in den Strömungskanal eingesetzt, wodurch der Wärmeaustausch massiv verbessert wird. Eine derartige Vorrichtung ist beispielsweise aus DE 28 08 854 C3 bekannt. Diese Vorrichtung mischt hauptsächlich den Stoffstrom und wird nach dem üblichen Sprachgebrauch als statischer Mischer bezeichnet.

Baugleiche rohrförmige statische Mischer lassen sich auch in einer Parallelschaltung nebeneinander anordnen und in Form eines Rohrbündelwärmetauschers einsetzen. Derartige Bauarten weisen jedoch durch die Parallelschaltung eine Neigung zur Maldistribution auf und besitzen insbesondere beim Kühlen keine definierte, enge Verweilzeitverteilung.

Mischer-Wärmetauscher sind Vorrichtungen mit Einbauten, bei denen der Wärmeübergang sowohl an der Rohrwand als auch bei den Einbauten stattfinden kann. Die Einbauten, auch als Einsatz bezeichnet, besitzen einerseits die Eigenschaften eines statischen Mischers, anderseits aber auch die Eigenschaften eines Wärmetauschers. Die Einbauten weisen Hohlräume oder Rohre auf, welche mit einem Wärmeträgermedium durchflossen werden. Dies erhöht zusätzlich die Wärmeübertragungsfläche, so dass es möglich wird, bei vergleichbaren Volumen eine deutlich höhere spezifische Wärmeübertragung zu erreichen. Diese Art von Mischer- und Wärmetauscher-Konstruktion wird als «statischer Mischer-Wärmetauscher» bezeichnet.

Dank statischen Mischer-Wärmetauschern können Fluide, wie beispielsweise Gase, Dispersionen, Suspensionen, Emulsionen und nieder- und hochviskose Flüssigkeiten, mit Grundoperationen wie Mischen und Wärme- und Stoffaustausch gleichzeitig kontinuierlich verarbeitet werden. Das hohe Wärmeübertragungsvermögen von statischen Mischer-Wärmetauschern sowie die ausgezeichnete Mischleistung erlauben den Einsatz als Wärmetauscher oder Reaktor.

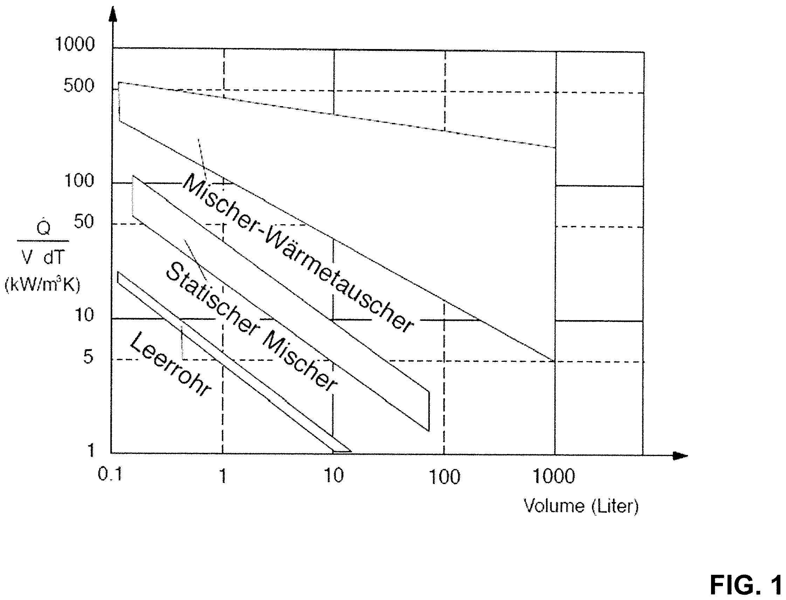

Figur 1 zeigt die spezifische Wärmeübertragungskapazität (kW m$^{-3}$ K$^{-1}$) eines Leerrohrs, eines statischen Mischers und eines statischen Mischer-Wärmetauschers in Funktion der Volumina.

Figur 1 zeigt eindrücklich die Unterschiede zwischen diesen Vorrichtungen. Es ist gut zu erkennen, dass sowohl beim Leerrohr als auch beim statischen Mischer mit zunehmendem Volumen die spezifische Wärmeübertragungskapazität massiv abnimmt. Dies lässt sich mit dem spezifische Oberflächen- zu Volumenverhältnis erklären. Wenn der Wärmeübergang lediglich am Mantelrohr stattfindet, so nimmt bei einer Skalierung die Wärmeübertragungsfläche quadratisch zu. Das Volumen weist aber eine VolumenZunahme hoch drei auf, was zu einem massiven Einbruch der spezifischen Wärmeübertragungskapazität (kW m$^{-3}$ K$^{-1}$) führt. Dieser Einbruch des Wärmüberganges kann bei einem statischen Mischer-Wärmetauscher verhindert oder zumindest erheblich reduziert werden, indem man das spezifische Oberflächen- zu Volumenverhältnis dank der zusätzlichen Einbauten mit Wärmeübergang im Betriebszustand konstant hält. Dank dieser Eigenschaften ist eine Skalierung mit annähernd konstantem Wärmeübergang bei vergleichbaren Betriebsbedingungen möglich. Statische Mischer und Leerrohre sind jedoch ohne Gefahr von Maldistributions-Effekten nicht skalierbar.

Es sind statische Mischer-Wärmetauscher bekannt, bei denen die Einsätze aus mehreren Rohren bestehen, durch die ein Temperierfluid, insbesondere eine Temperierflüssigkeit, geführt werden kann. Die Rohre werden derart gebogen, dass diese als Einsatz eine statische Mischergeometrie bilden. Solche Mischer-Wärmetauscher sind beispielsweise aus WO 2008/017571 A1 und WO 2017/129771 A1 bekannt. Einsätze aus reinen Rohrkonstruktionen besitzen jedoch den Nachteil, dass die Mischleistung sehr gering ist.

Es ist ein weiterer statischer Mischer-Wärmetauscher bekannt, bei dem die Einsätze aus mehreren Rohren bestehen, durch die eine Temperierflüssigkeit geführt werden kann. Zu den Rohren werden Leitbleche in den Einsatz eingebaut, welche die Strömung umlenken. Vereinfacht gesagt bestehen die Einsätze aus der Kombination von einem Rohrbündelwärmetauscher und einem statischen Mischelement. Solche Mischer-Wärmetauscher sind aus den EP 1 067 352 B1 und WO 2008/141472 A1 bekannt. Diese Wärmetauscher zeichnen sich durch eine sehr gute Mischleistung und eine hervorragende Skalierbarkeit aus.

WO 2017/129768 A1 zeigt einen Mischer-Wärmtauscher, bei dem der Einsatz, respektive die statische Mischergeometrie, als Hohlraum ausgeführt sind. Dabei fliesst die Temperierflüssigkeit sowohl um das Mischer-Wärmetauscher-Rohr als auch im Hohlraum. Nachteilig ist, dass die Skalierbarkeit aufgrund der geringeren Oberfläche, welche zur Verfügung steht, beschränkt ist.

Es ist bekannt, dass sich Stoffe und Gemische unter dem Einfluss der Temperatur oder während der Verweilzeit in einem statischen Mischer-Wärmetauscher verändern können. Die sich verändernden Stoffe und Gemische können zu Ablagerungen in Form einer dünnen Schicht oder zu Gel- und Kristallbildung führen, die sich am Mischer-Wärmetauscher absetzen und festkleben. Derartige, auch unter dem Begriff "Fouling" bekannte Ablagerungen, können statische Mischer-Wärmetauscher nur ungenügend selbst entfernen.

EP 2 113 732 A1 zeigt einen Mischer-Wärmetauscher, bei dem sich das Mischelement axial oszillierend bewegt und durch Schaben an der Rohroberfläche die Belagsbildung verhindert wird. Nachteilig bei dieser Ausführung ist, dass die Mischelemente die Wärmetauscher-Rohre zerkratzen können und es bei gewissen Fluidgemischen zu einem Anfressen der Mischelemente kommt. Dies blockiert die axial oszillierende Bewegung des Mischelementes.

EP 0 336 469 B1 beschreibt eine Füllkörper-Kolonne mit Elementen, welche mit intermittierender Pulsation eine Belagsbildung zu verhindern vermag. Füllkörper sind auch Elemente in Form von Kugel, Ringen oder Wellblechen und sind primär für den Stoffaustausch gedacht. Wird die Kolonne zum Heizen und Kühlen eingesetzt, findet der Wärmübergang am Mantelrohr statt. Wie in Fig. 1 dargestellt, weisen derartige Konstruktionen einen vergleichbaren Wärmeaustausch wie ein statischer Mischer auf. In keiner Weise besitzen sie aber die spezifische Wärmeübertragungskapazität eines statischen Mischer-Wärmetauschers.

In US 5 244 576 wird ein statischer Mischer mit intermittierender Pulsation betrieben. Ziel der Pulsation ist hier die Verbesserung der Mischleistung und die Reduktion von Fouling. Dieser statische Mischer besitzt aber keine Funktion zum Wärmaustausch.

DARSTELLUNG DER ERFINDUNG

Der Erfindung liegt die Aufgabe zugrunde, eine Einrichtung mit einem statischen Mischer-Wärmetauscher zu schaffen, welcher bei einer guten Misch- und Wärmeaustauschleistung eine Belagsbildung respektive ein Fouling zu verhindern oder zumindest zu reduzieren vermag.

Diese Aufgabe löst eine Einrichtung eines chemischen Reaktors, welche einen statischen Mischer-Wärmetauscher mit mindestens einem Einsatz sowie mindestens einen oszillierenden Pulsator aufweist, wobei das Fluidgemisch den statischen Mischer-Wärmetauscher in Form eines pulsierenden Flusses durchströmt.

Diese Aufgabe löst ferner ein Verfahren zum Betreiben eines chemischen Reaktors mit einem statischen Mischer-Wärmetauscher und mit mindestens einem Pulsator, welcher ein durch den statischen Mischer-Wärmetauscher fliessendes Fluidgemisch mit einer Pulsation beaufschlagt. Der Reaktor wird mit dem pulsierenden Fluidgemisch derart betrieben, dass die gerechnete Strömungsgeschwindigkeit ohne Pulsation im statischen Mischer-Wärmetauscher (1, 4) höchstens 0.2 m/s, bevorzugt höchstens 0.1 m/s und besonders bevorzugt höchstens 0.05 m/s beträgt und dass die gerechnete Schergeschwindigkeit im statischen Mischer-Wärmetauscher (1, 4) ohne Pulsation höchstens 100 1/s, bevorzugt höchstens 50 1/s besonders bevorzugt höchstens 30 1/s beträgt.

Vorteilhaft ist, dass der erfindungsgemässe statische Mischer-Wärmetauscher dank seiner Ausbildung skalierbar ist und deshalb auch in unterschiedlich grossen Verwirklichungen jeweils optimale Wirkung zeigt. Dank der Skalierbarkeit weist beispielsweise ein kleiner statischer Mischer-Wärmetauscher mit der Nennweite DN20 das annähernd gleiche spezifische Oberflächen- zu Volumenverhältnis auf wie zum Beispiel ein statischer Mischer-Wärmetauscher mit einer Nennweite von DN300. Dank diesen Eigenschaften ist es möglich, im Labor Versuche durchzuführen und danach eine grössere industrielle Anlage zu realisieren.

Er zeigt zudem ein enges Verweilzeitverhalten auf, so dass der Prozessablauf durch diese Vorrichtung nicht verzögert wird. Verweilzeiten von wenigen Sekunden bis zu mehreren Stunden lassen sich gleichermassen erzielen.

Vorteilhaft ist ferner, dass die erfindungsgemässe Einrichtung einfach und kostengünstig gefertigt werden kann.

Der statische Mischer-Wärmetauscher lässt sich einerseits als Wärmetauscher, anderseits auch als aktiverer Teil eines chemischen Reaktors einsetzen.

In einer ersten Ausführungsform umfasst die Einrichtung lediglich einen einzigen Mischer-Wärmetauscher. In anderen Ausführungsformen sind mehrere statische Mischer-Wärmetauscher vorhanden, wobei mindestens einer dieser statischen Mischer-Wärmetauscher vom pulsierenden Fluidgemisch durchströmbar ist.

In einer Ausführungsform ist der vom pulsierenden Fluidgemisch durchströmbare statische Mischer-Wärmetauscher Teil eines Kreislauf-Systems ist, wobei das Kreislauf-System eine Pumpe aufweist.

In einer Ausführungsform ist der vom pulsierenden Fluidgemisch durchströmbare Mischer-Wärmetauscher Teil eines Einliniensystems.

Je nach Ausführungsform ist am Eingang und/oder am Ausgang und/oder am Mantel des Mischer-Wärmetauschers mindestens ein Pulsator angeordnet.

Vorzugsweise weist der Pulsator eine Hublänge H von höchstens 1000 mm, bevorzugt von höchstens 200 mm, besonders bevorzugt von höchstens 100 mm auf.

Der statische Mischer-Wärmetauscher ist je nach Ausführungsform horizontal oder vertikal zur Hauptströmungsrichtung des Reaktors angeordnet.

In einer Ausführungsform sind mindestens zwei statische Mischer-Wärmetauscher vorhanden, wobei mindestens ein statischen Mischer-Wärmetauscher horizontal und mindestens ein zweiter der statischen Mischer-Wärmetauscher vertikal im chemischen Reaktor eingebaut sind.

Der Pulsator lässt sich auf unterschiedliche Weise verwirklichen. In bevorzugten Ausführungsformen ist er eine Membranpumpe ohne Rückschlagventile.

In anderen bevorzugten Ausführungsbeispielen ist er eine Kolbenpumpe ohne Rückschlagventile.

Der Einsatz ist vorzugsweise bekannter Art. Er ist von einem Temperierfluid durchströmt. Vorzugsweise weist er eine Kombination von statischen Mischelementen und Rohrbündel-Wärmetauschern auf, noch bevorzugter besteht er aus einer derartigen Kombination.

In bevorzugten Varianten des Verfahrens ist ein erster Pulsator an einem Eintritt des statischen Mischer-Wärmetauschers angeordnet und ein zweiter Pulsator ist an einem Austritt des statischen Mischer-Wärmetauschers angeordnet. Diese zwei Pulsatoren werden vorzugsweise derart betrieben, dass der zweite Pulsator einen oszillierenden Hub asynchron zum oszillierenden Hub des ersten Pulsators ausführt, so dass keine erheblichen Druckschwankung am Eintritt vor dem ersten Pulsator und am Austritt nach dem zweiten Pulsator festzustellen sind.

In einer bevorzugten Variante des Verfahrens wird der mindestens eine Pulsator mit einer Frequenz-Pulsation von höchstens 50 Hz, bevorzugt von höchstens 20 Hz besonders bevorzugt von höchstens 10 Hz betrieben.

KURZE BESCHREIBUNG DER ZEICHNUNGEN

Bevorzugte Ausführungen der Erfindung werden im Folgenden anhand der Zeichnungen beschrieben, die lediglich zur Erläuterung dienen und nicht einschränkend auszulegen sind. In den Zeichnungen zeigen:

Figur 1    eine graphische Darstellung der spezifischen Wärmeübertagungskapazität in Funktion des Volumens;

Figur 2    ein Koagulations - Gelbildungs - Fouling - Diagramm bei Re < 3000 und

Figur 3    eine schematische Darstellung einer erfindungsgemässen Vorrichtung.

BESCHREIBUNG BEVORZUGTER AUSFÜHRUNGSFORMEN

Hintergrund und Basisuntersuchungen

Wie bereits beschrieben neigen statische Mischer-Wärmetauscher aufgrund der grossen Wärmeaustauschflächen zu einem Fouling. Um ein Fouling untersuchen zu können, ist es wichtig zu wissen, welche Prozesse derartige Belagsbildungen auslösen. Es wurde erkannt, dass es sich einerseits um Stoffveränderungen der Fluidgemische durch die zu lange Verweilzeit handelt, und dass anderseits die Reaktion der Stoffe auch zu Koagulation, Kristall- und Gelbildung führen kann. Nicht zuletzt können Stoffe in Dispersion, Emulsion oder Suspensionen zu Koaleszenz führen, welche später die Folge von Belagsbildung und Ablagerungen bilden. Typische Prozesse sind beispielsweise chemische Reaktionen, Kristallisationen, Polymerisationen wie Massenpolymerisationen, Emulsions- und Suspensionspolymerisationen, radikalische Polymerisationsprozesse, ionische- und anionische Polymerisationen, Polyaddition, Polykondensationen, Veresterungen, das Temperieren von Duro- und Thermoplasten, die Verarbeitung von Elastomeren, Lebensmittelverarbeitungsprozesse und Extraktionsprozesse. Die Vorrichtung für all diese Prozessanwendungen wird mit dem Oberbegriff chemischer Reaktor bezeichnet.

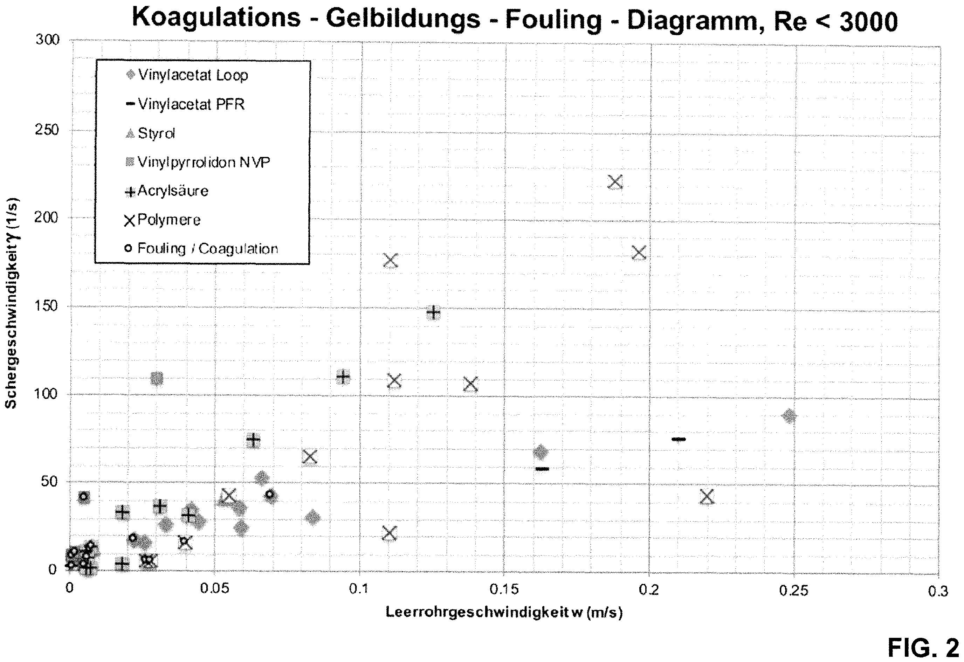

Als zweiter Schritt wurde untersucht, wann Fouling-Effekte entstehen. Figur 2 zeigt eine Analyse von verschiedenen industriellen Anwendungen mit dem Schwerpunkt auf Polymeren. Darin sind alle Koagulations-, Gelbildungs- und Fouling-Effekte von bekannten Anwendungen bei einer Reynoldszahl Re < 3000 zusammengefasst. Das Diagramm stellt in der X-Achse die Leerrohrgeschwindigkeit w in m s⁻¹ dar. Die Y-Achse zeigt die scheinbare mittlere Schergeschwindigkeit $\dot{\gamma}$ in s⁻¹, bei der die Anwendungen resp. Versuche erfolgt sind. Die Messpunkte der ausgewerteten Versuche zeigen verschiedene Materialien bei verschiedenen Prozessen. Die Messpunkte sind Auswertungen von statischen Mischer-Wärmetauschern, wie sie in EP 1 067 352 B1 und WO 2008/141472 A1 gezeigt und beschrieben sind. Zudem wurden einige Laborversuche in Leerrohren durchgeführt.

Die scheinbare mittlere Schergeschwindigkeit $\dot{\gamma}$ in s⁻¹ kann wie folgt ermittelt werden:

$$\dot{\gamma} = \frac{k \cdot w}{D}$$

Dabei ist k ein dimensionsloser Faktor, der von der Geometrie abhängig ist (Beispiel Leerrohr k = 8, Beispiel Mischer-Wärmetauscher $30 \leq k \geq 250$). D entspricht dem Durchmesser in Metern m. w entspricht der Strömungsgeschwindigkeit im m s⁻¹. Die scheinbare mittlere Schergeschwindigkeit $\dot{\gamma}$ ist die Schergeschwindigkeit, bei welcher der Druckverlust einer strukturviskosen Flüssigkeit berechnet werden kann. Dieser Wert ist dem Fachmann bestens bekannt. Referenzmaterial ist im hier beschriebenen Fall ein Polystyrol Polymer.

Mit dieser sehr einfachen Formel und dem Diagramm gemäss Figur 2 lässt sich allgemein für alle Prozesse eine erste Aussage machen, wann bei statischen Mischer-Wärmetauschern mit einem Fouling-Effekt gerechnet werden muss. Überraschend wurde erkannt, dass bei Reynolds-Zahlen von Re < 3000 ein klarer Trend ersichtlich wird. Sämtliche bekannten Fouling-Effekte werden, grosszügig interpretiert, bei Leerrohrgeschwindigkeiten w < 0.1 m/s und bei Schergeschwindigkeiten $\dot{\gamma}$ < 100 1/s festgestellt. Es kann somit vermutet werden, dass bei statischen Mischer-Wärmetauschern generell ein Einfluss von Strömungsgeschwindigkeit und Schergeschwindigkeit auf die Belagsbildung zu erwarten ist. Dies lässt sich nachweisen, indem der Durchfluss und somit die Strömungs- und Schergeschwindigkeit bei Prozessen erhöht wird. In allen untersuchten Fällen reduzierte sich die Belagsbildung deutlich oder verschwand vollständig. Dies lässt sich auch mit der Standzeit ermitteln, d.h. mit derjenigen mittleren Verweilzeit, bei der der Wärmeübergang im statischen Mischer-Wärmetauscher während des Prozesses einbricht.

Es wurde zudem festgestellt, dass die Oberflächenbeschaffenheit, die Geometrie- und Materialwahl des statischen Mischer-Wärmetauschers, die Mischleistung und das Prozessfluid einen erheblichen Einfluss auf den Fouling-Effekt haben. Zudem zeigte sich, dass ein Leerrohr bei gleicher Schergeschwindigkeit deutlich weniger Fouling-Effekte aufwies als ein statischer Mischer-Wärmetauscher. Überraschenderweise konnten diese Fouling-Effekte im statischen Mischer-Wärmetauscher durch die Erhöhung der Schergeschwindigkeit reduziert und verhindert werden.

Ein weiterer überraschender Effekt ist, dass der statische Mischer-Wärmetauscher, insbesondere bei radikalischen Polymerisationen bei gleicher Nennweite, deutlich weniger Fouling aufweist als ein herkömmlicher statischer Mischer. Dies lässt sich dadurch erklären, dass dank der hohen spezifischen Wärmeübertragungskapazität im statischen Mischer-Wärmetauscher geringere oder gar keine Temperaturspitzen auftreten.

Dies lässt darauf schließen, dass die getesteten statischen Mischer-Wärmetauscher keine Totzonen aufwiesen. Allerdings gibt es in jedem statischen Mischer-Wärmetauscher Zonen, welche mit einer geringeren Geschwindigkeit durchströmt werden. Ist die Strömung zu gering, dann ist der "Selbstreinigungseffekt" nicht ausreichend. Diesen Effekt weist jeder Einsatz eines statischen Mischer-Wärmetauschers auf.

Für Heiz- oder Kühlprozesse ist dies soweit kein Problem, da sich lediglich der Druckverlust im Prozess erhöht. Bei Reaktionsprozessen hat dieser Effekt jedoch deutliche Folgen. Erhöht man beispielsweise die Schergeschwindigkeit in einem Rohrreaktor, so muss auch mit einer Erhöhung der Strömungsgeschwindigkeit gerechnet werden. Dies hat aber zur Folge, dass die Verweilzeit, die für die Reaktion zur Verfügung steht, erheblich verkürzt wird. Somit wird der Reaktor sehr lang und in vielen Fällen wirtschaftlich uninteressant. Im Stand der Technik werden deshalb industrielle kontinuierliche Prozesse bei belagbildenden Fluiden grösstenteils im Rührwerk realisiert.

Statische Mischer-Wärmetauscher können zwar deutlich kürzer gebaut werden und die Einsätze sind leicht auszubauen und zu reinigen. Trotzdem wird klar, dass die Verwendung von statischen Mischer-Wärmetauschern aufgrund des Foulings deutlich begrenzt ist, wenn keine zusätzlichen Massnahmen gefunden werden.

Eine Möglichkeit zur Lösung des oben genannten Problems ist, den Reaktor bei hoher Schergeschwindigkeit im Kreislauf zu fahren. Dies kann aber einen Einfluss auf die Selektivität der Reaktion haben. Zudem kann in einem Kreislaufreaktor nie ein vollständiger Umsatz erzielt werden. Diese Massnahme ist somit lediglich eine Verbesserung der Situation, jedoch nicht die vollständige, definitive Lösung.

Beispiel

Bei der Entwicklung eines neuen kontinuierlichen Herstellungsprozesses mit einem statischen Mischer-Wärmetauscher wurde in einer Emulsions-Polymerisation Polyvinylacetat polymerisiert. Die Emulsion bestehend aus Monomer, Wasser, Emulgator und Initiator wurde kalt vorgemischt. Sie wurde einerseits in temperierten statischen Mischer-Wärmetauschern mit Einsatz (MWT1 und MWT2) und andererseits in einem Leerrohr aufgewärmt und kontinuierlich polymerisiert. Das Reaktionssystem verhielt sich ohne Pulsation wie folgt:

| Typ | Verweilzeit | Fouling | w (m/s) | $\dot{\gamma}$ (1/s) |
|---|---|---|---|---|
| Leerrohr* | ca. 10 Min | Ja | 0.0022 | 1.3 |
| Leerrohr* | ca. 40 Min | Ja | 0.0221 | 17.7 |
| Leerrohr* | ca. 70 Min | Nein | 0.0447 | 27.9 |
| Leerrohr* | ca. 70 Min | Nein | 0.0583 | 36.4 |
| MWT 1 | ca. 10 Min | Ja | 0.0012 | 6.1 |
| MWT 1 | ca. 10 Min | Ja | 0.0024 | 12.2 |
| MWT 2 | ca. 20 Min | Ja | 0.0012 | 18.6 |
| MWT 2 | ca. 20 Min | Ja | 0.0024 | 37.2 |
| * das Leerrohr wurde während der Verweilzeit im Kreislauf gefahren | | | | |

Als statische Mischer-Wärmetauscher wurden die Vorrichtungen verwendet, wie sie in EP 1 067 352 B1 und WO 2008/141472 A1 beschrieben sind. Sie wurden bei gleichen Strömungsgeschwindigkeiten getestet, wobei MWT 1 der Mischer-Wärmetauscher gemäss EP 1 067 352 B1 und MWT 2 der Mischer-Wärmetauscher gemäss WP 2008/141472 A1 ist. Der Inhalt dieser Publikationen ist durch Referenz hier aufgenommen.

MWT 1 ist auf dem Markt unter dem Namen Fluitec Mischer-Wärmetauscher CSE-XR bekannt, MWT 2 unter dem Namen Fluitec Mischer-Wärmetauscher CSE-XR DS. Die verwendeten statischen Mischer-Wärmetauscher wiesen eine Nennweite DN50 auf und wurden vertikal eingebaut.

Die Pulsation wurde am Eintritt des Mischer-Wärmetauschers durch einen oszillierenden Pulsator erzeugt, hier durch einen Kolben. Alternativ ist beispielsweise auch die Verwendung einer oszillierenden Membran möglich. Verwendet wurde eine Lewa ecosmart- Pumpe ohne Rückschlagventile mit einer Hubfrequenz von 2.72 Hz und einem Kolbendurchmesser von 42 mm. Der Kolbenhub war verstellbar von 0 - 13 mm. Der max. mögliche Hubstrom konnte von 0 bis 66 1/h eingestellt werden.

Überraschenderweise wurde trotz der grossen Wärmeaustauschflächen im statischen Mischer-Wärmetauscher ein vergleichbarer Fouling-reduzierender Effekt erzielt. Die Besonderheit der erfinderischen Reaktionsführung ist, dass durch den pulsierenden Fluss der Reaktionsmischung ein Strömungseffekt erzielt wird, der eine Belagsbildung (und Verstopfung) verhindert. Der Effekt lässt sich so erklären, dass durch die Pulsation eine oszillierende Rückströmung erzeugt wird, welche die Strömungszonen mit geringerer Durchströmung vollständig spült. Wird die Rückströmung so gewählt, dass der Spüleffekt die Zone ausreichend spült, werden optimale Resultate erzielt. Überraschend wurde zudem festgestellt, dass das Volumen im oszillierenden Kolben reduziert werden kann, wenn die Frequenz der Pulsation erhöht wird. Dieser Vorteil führt zu kleineren Kolbenvolumen. Die Belagsbildung im Reaktionssystem verhielt sich mit Pulsation wie folgt:

| Typ | Verweilzeit | Fouling | w (m/s) | $\dot{\gamma}$ (1/s) |
|---|---|---|---|---|
| MWT 1 | ca. 70 Min | Nein | 0.0012 | 6.1 |
| MWT 1 | ca. 70 Min | Nein | 0.0024 | 12.2 |
| MWT 2 | ca. 70 Min | Nein | 0.0012 | 18.6 |
| MWT 2 | ca. 70 Min | Nein | 0.0024 | 37.2 |

Betrachtet man nun theoretisch den statischen Mischer-Wärmetauscher (MWT 1) bei einem Durchfluss von 10 l/h, so erzielt dieser für eine organische Flüssigkeit eine spezifische Wärmeübertragungskapazität von 25.3 W/K pro Liter. Für eine Verweilzeit von ca. 70 Minuten können zwei statische Mischer-Wärmetauscher in Serie geschaltet mit einer Länge von je 4 m eingesetzt werden. Bei einem vergleichbaren Leerrohr mit einem Durchmesser von 12.6 mm erzielt man für eine organische Flüssigkeit eine spezifische Wärmeübertragungskapazität von 23.4 W/K pro Liter. Die Länge des statischen Mischer-Wärmetauschers beträgt ca. 95 m. Das Rohr vermag einen vergleichbaren Wärmeübergang zu erzielen. Ein Betrieb ohne Fouling ist aber nicht gewährleistet. Ein statischer Mischer-Wärmetauscher (MWT 2) im zusätzlichen Vergleich erzielt eine spezifische Wärmeübertragungskapazität von 38.5 W/K pro Liter.

Überraschenderweise wurde durch die Pulsation der Wärmeübergang zudem um bis zu 20% verbessert. Der pulsierende statische Mischer-Wärmetauscher zeigt an diesem Beispiel seine Überlegenheit und beweist, dass er mit Pulsator für einen industriellen Einsatz bestens geeignet ist.

Bevorzugte Ausführungen

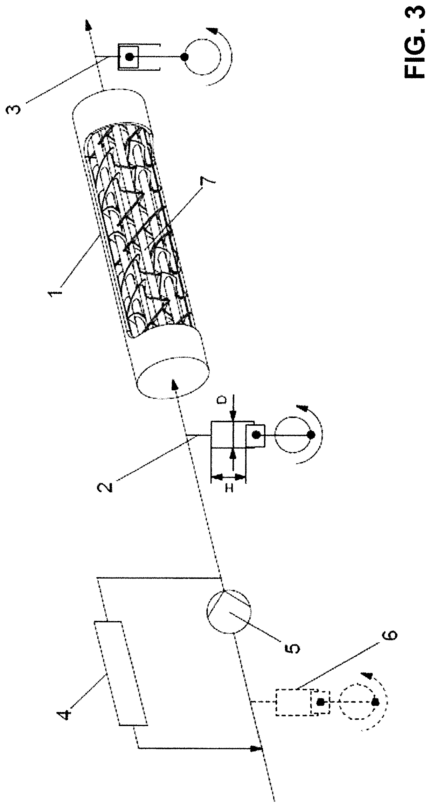

In Figur 3 ist ein bevorzugtes Ausführungsbeispiel dargestellt. Die erfindungsgemässe Einrichtung eines chemischen Reaktors umfasst mindestens einen Mischer-Wärmetauscher 1, 4 mit einem Einsatz 7, welcher von einem Wärmeträgermedium durchflossen ist. Derartige Mischer-Wärmetauscher sind eingangs beschrieben und werden beispielsweise von Fluitec mixing + reaction solutions AG seit Jahren hergestellt und vertrieben. Der hier dargestellte Einsatz 7 entspricht dem Einsatz, wie er in EP 1 067 352 B1 beschrieben ist.

Die erfindungsgemässe Einrichtung weist ferner ein Mittel zur Erzeugung einer Pulsation im Reaktionsfluid auf. Vorzugsweise weist sie hierzu mindestens einen oszillierenden Pulsator 2, 3, 5, 6 auf. Der Pulsator lässt sich in einer ersten einfachen Ausführungsform mit einer im chemischen Reaktor ohnehin schon vorhandenen Pumpe 5 verwirklichen. In anderen Ausführungsformen sind eigenständige Elemente im chemischen Reaktor vorhanden, welche als Pulsatoren ausgebildet sind.

Der Pulsator 2, 3, 5, 6 ist nicht auf einen bestimmten Standort innerhalb des Reaktors beschränkt. Er kann vorzugsweise überall, insbesondere am Eintritt, am Austritt und/oder an einer Aussenseite des statischen Mischer-Wärmetauschers 1, 4 angeordnet sein.

Weist der chemische Reaktor mehrere Mischer-Wärmetauscher 1, 4 auf, so ist vorzugsweise im Bereich des mindestens einen Haupt-Mischer-Wärmetauschers mindestens ein Pulsator angeordnet, d.h. desjenigen Mischer-Wärmetauschers, welche im Hauptstrom des Reaktionsfluids angeordnet ist. Mischer-Wärmetauscher in Nebenleitungen sind vorzugsweise jedoch nicht zwingend mit Pulsatoren versehen.

Im hier dargestellten Beispiel ist der erste statische Mischer-Wärmetauscher 1 im Hauptstrom angeordnet. Er weist an seinem Eingang einen ersten Pulsator 2 und an seinem Ausgang einen zweiten Pulsator 3 auf. In anderen Ausführungsformen ist nur einer dieser zwei Pulsatoren 2, 3 vorhanden bzw. der Pulsator wirkt auf den Mantel des ersten Mischer-Wärmetauschers 1.

Der hier dargestellte chemische Reaktor weist zudem einen Kreislauf auf mit einer Pumpe 5 und einem zweiten statischen Mischer-Wärmetauscher 4, welcher in einer Nebenleitung angeordnet ist. In einer ist für diesen Kreislauf kein Pulsator vorhanden. In einer weiteren Ausführungsform pulsiert die Kreislaufschaltung mit Hilfe der Pumpe 5, welche somit den Pulsator bildet. In einer dritten Ausführungsform ist zusätzlich oder alternativ zur als Pumpe 5 wirkender Pulsator ein weiterer dritter Pulsator 6 vorhanden. Dieser ist in Figur 3 gestrichelt dargestellt. Er kann, wie hier dargestellt, in der Hauptstromleitung angeordnet sein oder in der Nebenleitung. Es können mehrere Kreisläufe vor oder nach dem Haupt-Mischer-Wärmetauscher geschaltet werden.

Als Pulsatoren 2, 3, 5, 6 lassen sich aus dem Stand der Technik geeignete Mittel einsetzen. Vorzugsweise sind die Pulsatoren 2, 3, 5, 6 Membran- oder Kolbendosierpumpen ohne Ventile, Drehventilpulsatoren, pneumatische Schlauchquetschventile, herkömmliche Pulsationsdämpfer, Drehtellerpulsatoren oder pneumatische, magnetische oder elektronisch gesteuerte Kolben- oder Druckpulsatoren. Es lassen sich auch mehrere Pulsatoren 2, 3, 5, 6 an einem statischen Mischer-Wärmetauscher 1, 4 verwenden.

Sind zwei oder mehr Pulsatoren 2, 3, 5, 6 vorhanden, sind sie je nach Ausführungsform zufällig, synchron oder asynchron zueinander betrieben. Im hier dargestellten Ausführungsbeispiel ist der zweite Pulsator 3 asynchron zum ersten Pulsator 2 betrieben. Der erste Pulsator 2 weist in diesem Beispiel einen maximalen Hub H auf. Der zweite Pulsator 3 weist in diesem Beispiel einen minimalen Hub von H = 0 auf.

Das pulsierende Volumen, welches das Fouling reduziert, wird durch die Grösse des pulsierenden Querschnittes und der Hublänge H des Pulsators 2, 3, 5, 6 bestimmt. Der Querschnitt ist beispielsweise kreisförmig mit einem Durchmesser D. Das pulsierende Volumen wird im Falle eines Kolbenpulsators durch den Kolbenhub definiert. Vorzugsweise beträgt die Hublänge H des Kolbens höchstens 1000 mm, noch bevorzugter höchstens 200 mm und besonders bevorzugt höchstens 100 mm. Der Kolben kann vorzugsweise jede beliebige Querschnittsform aufweisen. Vorzugsweise ist er beispielsweise über Dichtringe, Packungen oder Membranen abgedichtet. Die Pulsationsfrequenz beträgt vorzugsweise höchstens 50 Hz, bevorzugter höchstens 20 Hz und besonders bevorzugt höchstens 10 Hz.

Grundvoraussetzung einer Selbstreinigung ist das Vorhandensein einer minimalen Strömungsgeschwindigkeit, bestimmt durch den Volumenstrom, welcher den ersten statischen Mischer-Wärmetauscher 1 durchströmt. Die gerechnete minimale Strömungsgeschwindigkeit ohne Pulsation beträgt höchstens 0.2 m/s, bevorzugt höchstens 0.1 m/s und besonders bevorzugt höchstens 0.05 m/s. Gleichzeitig beträgt die gerechnete Schergeschwindigkeit im ersten statischen Mischer-Wärmetauscher 1 ohne Pulsation vorzugsweise höchstens 100 1/s, bevorzugt höchstens 50 1/s und besonders bevorzugt höchstens 30 1/s beträgt.

Bei diesen Betriebsbedingungen ist es möglich einen Reaktor auch ohne Kreislauf zu betreiben und auch mit einer längeren Verweilzeit zu betreiben.

Für den zweiten statischen Mischer-Wärmetauscher 4 im Kreislauf ergeben sich keine Begrenzungen, da die Verweilzeit durch die Kreislaufrate nicht beeinflusst wird.

Der erste und/oder zweite statische Mischer-Wärmetauscher 1, 4 kann vertikal oder horizontal eingebaut werden. Er kann einzeln oder in Segmenten sowohl gestapelt übereinander als auch vertikal aneinandergereiht nebeneinandergeschaltet werden.

Die erfindungsgemässe Einrichtung und das erfindungsgemässe Verfahren ermöglichen die Reduktion von Fouling. Zudem lassen sich im Labor getestete Einrichtungen skalieren und in entsprechender Vergrösserung in industriellen chemischen Anlagen verwenden.

BEZUGSZEICHENLISTE

1    erster statischer Mischer-Wärmetauscher
2    erster Pulsator
3    zweiter Pulsator
4    zweiter statischer Mischer-Wärmetauscher
5    Pumpe
6    dritter Pulsator
7    Mischer-Wärmetauscher Einsatz

**Patentansprüche**

1. Einrichtung eines chemischen Reaktors, wobei die Einrichtung einen statischen Mischer-Wärmetauscher (1, 4) mit mindestens einem Einsatz (7) aufweist, wobei der statische Mischer-Wärmetauscher (1) von einem Fluidgemisch durchströmbar ist,
**dadurch gekennzeichnet, dass** die Einrichtung ferner mindestens einen oszillierenden Pulsator (2, 3, 5, 6) aufweist, so dass das Fluidgemisch den Mischer-Wärmetauscher (1, 4) in Form eines pulsierenden Flusses durchströmt.

2. Einrichtung nach Anspruch 1, wobei mehrere statische Mischer-Wärmetauscher (1, 4) vorhanden sind und wobei mindestens einer dieser statischen Mischer-Wärmetauscher (1, 4) vom pulsierenden Fluidgemisch durchströmbar ist.

3. Einrichtung nach einem der Ansprüche 1 oder 2, wobei der vom pulsierenden Fluidgemisch durchströmbare statische Mischer-Wärmetauscher (4) Teil eines Kreislauf-Systems ist, wobei das Kreislauf-System eine Pumpe (5) aufweist.

4. Einrichtung nach einem der Ansprüche 1 oder 2, wobei der vom pulsierenden Fluidgemisch durchströmbare Mischer-Wärmetauscher (1) Teil eines Einliniensystems ist.

5. Einrichtung nach einem der Ansprüche 1 bis 4, wobei der Mischer-Wärmetauscher (1, 4) einen Eintritt und einen Austritt aufweist und wobei der mindestens eine Pulsator (2, 3, 6) am Eintritt oder am Austritt angeordnet ist.

6. Einrichtung nach einem der Ansprüche 1 bis 4, wobei der Mischer-Wärmetauscher (1, 4) einen Eintritt und einen Austritt aufweist und wobei je ein Pulsator (2, 3, 6) am Eintritt und Austritt angeordnet ist.

7. Einrichtung nach einem der Ansprüche 1 bis 6, wobei der mindestens eine Pulsator (2, 3, 5, 6) eine Hublänge H von höchstens 1000 mm, bevorzugt höchstens 200 mm, besonders bevorzugt höchstens 100 mm aufweist.

8. Einrichtung nach einem der Ansprüche 1 bis 7, wobei der statische Mischer-Wärmetauscher (1, 4) eine Hauptströmungsrichtung aufweist, welche bei bestimmungsgemässer Anordnung des Mischer-Wärmetauschers (1, 4) im chemischen Reaktor horizontal verläuft.

**9.** Einrichtung nach einem der Ansprüche 1 bis 8, wobei mindestens zwei statische Mischer-Wärmetauscher (1, 4) vorhanden sind und wobei mindestens ein erster der statischen Mischer-Wärmetauscher (1, 4) horizontal und mindestens ein zweiter der statischen Mischer-Wärmetauscher (1, 4) vertikal im chemischen Reaktor eingebaut ist.

**10.** Einrichtung nach einem der Ansprüche 1 bis 9, wobei mindestens einer des mindestens einen Pulsators (2, 3, 5, 6) eine Membranpumpe ohne Rückschlagventile ist.

**11.** Einrichtung nach einem der Ansprüche 1 bis 10, wobei mindestens einer des mindestens einen Pulsators (2, 3, 5, 6) eine Kolbenpumpe ohne Rückschlagventile ist.

**12.** Einrichtung nach einem der Ansprüche 1 bis 10, wobei der Einsatz (7) eine Kombination von statischen Mischelementen und Rohrbündel-Wärmetauschern aufweist.

**13.** Verfahren zum Betreiben eines chemischen Reaktors mit einem statischen Mischer-Wärmetauscher, wobei der statische Mischer-Wärmetauscher (1, 4) mindestens einen Einsatz (7) und der chemische Reaktor mindestens einen Pulsator (2, 3, 5, 6) aufweist, welcher ein durch den statischen Mischer-Wärmetauscher (1, 4) fliessendes Fluidgemisch mit einer Pulsation beaufschlagt,
wobei der Reaktor mit dem pulsierenden Fluidgemisch derart betrieben wird, dass die gerechnete Strömungsgeschwindigkeit ohne Pulsation im statischen Mischer-Wärmetauscher (1, 4) höchstens 0.2 m/s, bevorzugt höchstens 0.1 m/s und besonders bevorzugt höchstens 0.05 m/s beträgt und dass die gerechnete Schergeschwindigkeit im statischen Mischer-Wärmetauscher (1, 4) ohne Pulsation höchstens 100 1/s, bevorzugt höchstens 50 1/s besonders bevorzugt höchstens 30 1/s beträgt.

**14.** Verfahren nach Anspruch 13, wobei ein erster Pulsator (2) an einem Eintritt des statischen Mischer-Wärmetauschers (1) angeordnet ist und ein zweiter Pulsator (3) an einem Austritt des statischen Mischer-Wärmetauschers (1) angeordnet ist, wobei die zwei Pulsatoren (2, 3) derart betrieben werden, dass der zweite Pulsator (3) einen oszillierenden Hub asynchron zum oszillierenden Hub des ersten Pulsators (2) ausführt, so dass keine erheblichen Druckschwankung am Eintritt vor dem ersten Pulsator (2) und am Austritt nach dem zweiten Pulsator (3) festzustellen sind.

**15.** Verfahren nach einem der Ansprüche 13 oder 14, wobei der mindestens eine Pulsator (2, 3, 5, 6) mit einer Frequenz-Pulsation von höchstens 50 Hz, bevorzugt von höchstens 20 Hz besonders bevorzugt von höchstens 10 Hz betrieben wird.

**16.** Verfahren nach einem der Ansprüche 13 bis 15, wobei der mindestens eine Pulsator (2, 3, 5, 6) mit einer Hublänge H des Kolbens von höchstens 1000 mm, noch bevorzugter höchstens 200 mm und besonders bevorzugt höchstens 100 mm betrieben wird.

FIG. 1

# Koagulations - Gelbildungs - Fouling - Diagramm, Re < 3000

FIG. 2

EP 3 620 230 A1

FIG. 3

Europäisches Patentamt

European Patent Office

Office européen des brevets

## EUROPÄISCHER RECHERCHENBERICHT

Nummer der Anmeldung

EP 18 19 3090

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 2012/095176 A1 (DSM IP ASSETS BV [NL]; REINTJENS RAFAEL WILHELMUS ELISABETH GHISLAIN []) 19. Juli 2012 (2012-07-19) | 1,3-11, 13,15,16 | INV. B01J19/241 |
| Y | * Abbildung 5 * | 2,12 | ADD. |
| A | | 14 | B01J19 |
| | ----- | | |
| Y | EP 2 881 154 A1 (FLUITEC INVEST AG [CH]) 10. Juni 2015 (2015-06-10) | 2 | |
| A | * Absatz [0046] * | 14 | |
| | ----- | | |
| Y | EP 1 067 352 A1 (FLUITEC GEORG AG [CH]) 10. Januar 2001 (2001-01-10) * Abbildung 1 * | 12 | |
| | ----- | | |

RECHERCHIERTE SACHGEBIETE (IPC)

B01J

Der vorliegende Recherchenbericht wurde für alle Patentansprüche erstellt

| Recherchenort | Abschlußdatum der Recherche | Prüfer |
|---|---|---|
| München | 4. Juli 2019 | Pasanisi, Andrea |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

&  : Mitglied der gleichen Patentfamilie, übereinstimmendes Dokument

EPO FORM 1503 03.82 (P04C03)

Europäisches
Patentamt

European
Patent Office

Office européen
des brevets

Nummer der Anmeldung

EP 18 19 3090

## GEBÜHRENPFLICHTIGE PATENTANSPRÜCHE

Die vorliegende europäische Patentanmeldung enthielt bei ihrer Einreichung Patentansprüche, für die eine Zahlung fällig war.

☐ Nur ein Teil der Anspruchsgebühren wurde innerhalb der vorgeschriebenen Frist entrichtet. Der vorliegende europäische Recherchenbericht wurde für jene Patentansprüche erstellt, für die keine Zahlung fällig war, sowie für die Patentansprüche, für die Anspruchsgebühren entrichtet wurden, nämlich Patentansprüche:

☐ Keine der Anspruchsgebühren wurde innerhalb der vorgeschriebenen Frist entrichtet. Der vorliegende europäische Recherchenbericht wurde für die Patentansprüche erstellt, für die keine Zahlung fällig war.

## MANGELNDE EINHEITLICHKEIT DER ERFINDUNG

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

Siehe Ergänzungsblatt B

☒ Alle weiteren Recherchengebühren wurden innerhalb der gesetzten Frist entrichtet. Der vorliegende europäische Recherchenbericht wurde für alle Patentansprüche erstellt.

☐ Da für alle recherchierbaren Ansprüche die Recherche ohne einen Arbeitsaufwand durchgeführt werden konnte, der eine zusätzliche Recherchengebühr gerechtfertigt hätte, hat die Recherchenabteilung nicht zur Zahlung einer solchen Gebühr aufgefordert.

☐ Nur ein Teil der weiteren Recherchengebühren wurde innerhalb der gesetzten Frist entrichtet. Der vorliegende europäische Recherchenbericht wurde für die Teile der Anmeldung erstellt, die sich auf Erfindungen beziehen, für die Recherchengebühren entrichtet worden sind, nämlich Patentansprüche:

☐ Keine der weiteren Recherchengebühren wurde innerhalb der gesetzten Frist entrichtet. Der vorliegende europäische Recherchenbericht wurde für die Teile der Anmeldung erstellt, die sich auf die zuerst in den Patentansprüchen erwähnte Erfindung beziehen, nämlich Patentansprüche:

☐ Der vorliegende ergänzende europäische Recherchenbericht wurde für die Teile der Anmeldung erstellt, die sich auf die zuerst in den Patentansprüchen erwähnte Erfindung beziehen (Regel 164 (1) EPÜ).

**Europäisches Patentamt**
**European Patent Office**
**Office européen des brevets**

**MANGELNDE EINHEITLICHKEIT**
**DER ERFINDUNG**
**ERGÄNZUNGSBLATT B**

**Nummer der Anmeldung**

EP 18 19 3090

Nach Auffassung der Recherchenabteilung entspricht die vorliegende europäische Patentanmeldung nicht den Anforderungen an die Einheitlichkeit der Erfindung und enthält mehrere Erfindungen oder Gruppen von Erfindungen, nämlich:

1. Ansprüche: 1-12(vollständig); 13, 15, 16(teilweise)

   Die technischen Merkmale, die die Erfindung 1 hervorheben, sind: Einrichtung nach Anspruch 1, wobei mehrere statische Mischer-Wärmetauscher vorhanden sind und wobei mindestens einer dieser statischen Mischer-Wärmetauscher vom pulsierenden Fluidgemisch durchströmbar ist.
   ---

2. Ansprüche: 14(vollständig); 13, 15, 16(teilweise)

   Die technischen Merkmale, die die Erfindung 2 hervorheben, sind:
   Verfahren nach Anspruch 13, wobei ein erster Pulsator an einem Eintritt des statischen Mischer-Wärmetauschers angeordnet ist und ein zweiter Pulsator an einem Austritt des statischen Mischer-Wärmetauschers angeordnet ist, wobei die zwei Pulsatoren derart betrieben werden, dass der zweite Pulsator einen oszillierenden Hub asynchron zum oszillierenden Hub des ersten Pulsators ausführt, so dass keine erheblichen Druckschwankung am Eintritt vor dem ersten Pulsator und am Austritt nach dem zweiten Pulsator festzustellen sind.
   ---

**ANHANG ZUM EUROPÄISCHEN RECHERCHENBERICHT
ÜBER DIE EUROPÄISCHE PATENTANMELDUNG NR.**

EP 18 19 3090

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

04-07-2019

| Im Recherchenbericht angeführtes Patentdokument | Datum der Veröffentlichung | Mitglied(er) der Patentfamilie | Datum der Veröffentlichung |
|---|---|---|---|
| WO 2012095176 A1 | 19-07-2012 | CN 103328092 A<br>EP 2663396 A1<br>US 2014081038 A1<br>WO 2012095176 A1 | 25-09-2013<br>20-11-2013<br>20-03-2014<br>19-07-2012 |
| EP 2881154 A1 | 10-06-2015 | KEINE | |
| EP 1067352 A1 | 10-01-2001 | AT 248345 T<br>DE 50003420 D1<br>EP 1067352 A1 | 15-09-2003<br>02-10-2003<br>10-01-2001 |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 2808854 C3
- WO 2008017571 A1
- WO 2017129771 A1
- EP 1067352 B1
- WO 2008141472 A1
- WO 2017129768 A1
- EP 2113732 A1
- EP 0336469 B1
- US 5244576 A